# FASCICULE DE BREVET EUROPEEN

(11) **EP 2 260 553 B1**
(45) Date de publication et mention de la délivrance du brevet: **07.02.2018**
(21) Numéro de dépôt: 09719182.9
(22) Date de dépôt: 24.02.2009
(51) Int. Cl.: H02G 3/04, H02G 1/06

(54) **DISPOSITIF DE FIXATION D'UNE PLURALITÉ DE CÂBLES REGROUPÉS ENTRE EUX**
VORRICHTUNG ZUR BEFESTIGUNG MEHRERER ZUSAMMENGEFASSTER KABEL
DEVICE FOR ATTACHING A PLURALITY OF CABLES GROUPED TOGETHER

(30) Priorité: 26.02.2008 FR 0851210
(43) Date de publication de la demande: 15.12.2010
(73) Titulaire: ALSTOM Transport Technologies, 93400 Saint-Ouen (FR)
(72) Inventeur: WUILLOT, Ludovic, F-59300 Aulnoy-lez-Valenciennes (FR); DAYEZ, Francis, F-59124 Escaudain (FR); FAVIER, Fredy, F-59230 Saint Amand Les Eaux (FR)
(74) Mandataire: Lavoix
(86) Numéro de dépôt international: PCT/FR2009/050293
(87) Numéro de publication internationale: WO 2009/112754

(56) Documents cités:
- EP-A- 0 813 012
- EP-A- 1 744 423
- EP-A- 1 868 272
- WO-A-99/10957
- WO-A-2004/049531
- FR-A- 2 138 092
- FR-A- 2 888 056
- US-B1- 6 231 014

## Description

La présente invention concerne un ensemble de fixation d'une pluralité de câbles serrés entre eux.

La présente invention concerne également un procédé de fixation de câbles sur un ensemble de fixation.

Dans de nombreuses applications, il est nécessaire d'acheminer des faisceaux de câbles de points à d'autres, par exemple pour assurer l'alimentation électrique de différents éléments ou pour permettre l'actionnement de ces éléments. Ainsi, les trains, métros, tramways et plus généralement tous les véhicules ferroviaires comportent un grand nombre de câbles reliant différents points du véhicule entre eux.

Afin de réaliser des économies d'espace, réduire l'encombrement et également faciliter le raccordement des différents câbles, on essaye le plus possible de regrouper ceux-ci entre eux et de les faire passer par des trajets communs, dits chemins de câbles. Les chemins de câbles sont prévus sur des plaques disposées dans le véhicule et sur lesquelles les faisceaux de câbles sont fixés régulièrement afin d'acheminer les faisceaux d'un point à un autre.

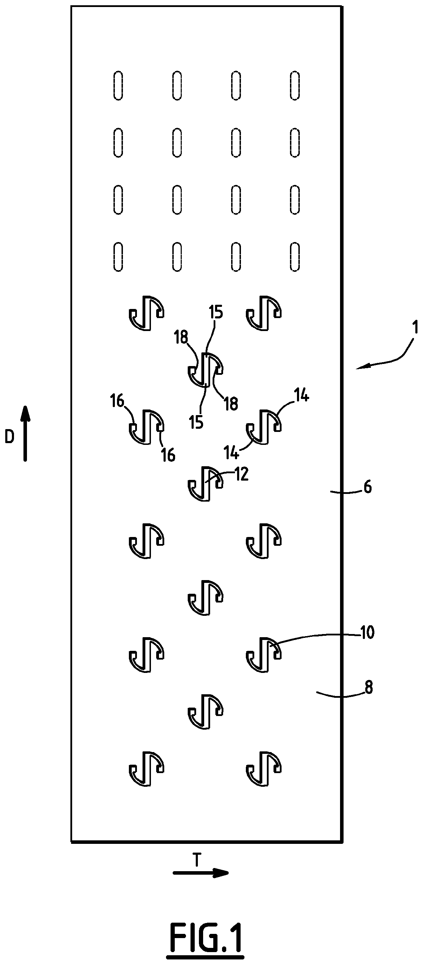

Les câbles sont regroupés entre eux par un moyen de serrage des câbles entre eux, tel que des colliers de serrage classiques. Pour assurer la fixation des câbles ainsi regroupés, les colliers sont fixés sur les plaques formant les chemins de câble. A cet effet, les plaques sont pourvues de fentes réparties régulièrement sur les plaques et permettant le passage des colliers de serrage sur l'autre face de la plaque afin d'assurer la fixation des câbles sur la plaque. Le document US6231014 décrit un ensemble de fixation d'une pluralité de câbles tel que défini dans le préambule de la revendication indépendante 1. Le document EP1744423 décrit un dispositif de fixation comprenant des languettes s'étendant en saillie d'une plaque de fixation. On a représenté sur le haut de la Fig. 1 une telle plaque pourvue de fentes régulièrement réparties en lignes et en colonnes. Pour fixer un ensemble de câbles sur la plaque, un opérateur dispose la pluralité de câbles sur une face de la plaque entre deux colonnes de fentes et les maintient contre la plaque. Il prend ensuite un collier de serrage dont il fait passer une partie extrême par une fente de sorte à faire passer le collier de serrage sur l'autre face de la plaque. Il récupère la partie extrême du collier et la fait passer par une fente de la colonne adjacente à celle de la première fente entre lesquelles passent les câbles, de sorte à faire repasser la partie extrême sur la première face de la plaque. L'opérateur ferme ensuite le collier autour des câbles et assure le serrage du collier. Ainsi, le collier assure le maintien des câbles entre eux et la fixation sur la plaque. Ces opérations sont répétées un grand nombre de fois pour que plusieurs colliers assurent la fixation d'un ensemble de câbles sur la plaque.

De telles opérations sont compliquées à réaliser et très coûteuses en temps. En effet, l'opérateur doit pouvoir accéder à l'autre face de la plaque pour faire passer les colliers de serrage, ce qui n'est pas forcément évident dans des véhicules ferroviaires où l'espace est réduit. En outre, la deuxième face n'est souvent pas visible pour l'opérateur qui doit donc passer le collier sur la deuxième face en tâtonnant et effectuer un montage « en aveugle ». De plus, il doit pouvoir maintenir pendant ce temps l'ensemble des câbles contre la plaque.

L'un des buts de l'invention est de pallier ces inconvénients en proposant un dispositif de fixation du type précité permettant de faciliter la fixation d'un ensemble de câbles sur le dispositif et de réduire de façon conséquente le temps nécessaire pour réaliser cette fixation.

A cet effet, l'invention concerne un ensemble de fixation d'une pluralité de câbles serrés entre eux suivant la revendication indépendante 1. Les revendications dépendantes 2 à 9 décrivent des exemples de réalisation avantageux de l'objet de la revendication 1. D'autres aspects et avantages de l'invention apparaîtront au cours de la description qui suit, donnée à titre d'exemple et faite en référence aux dessins annexés, dans lesquels :
- la figure 1 est une représentation schématique vue du dessus d'une plaque de fixation de câbles, la partie supérieure de la plaque montrant des fentes selon l'art antérieur et la partie inférieure montrant des empreintes selon un mode de réalisation de l'invention,
- la figure 2 est une représentation schématique d'un dispositif de fixation selon un mode de réalisation de l'invention sur lequel un ensemble de câbles est fixé,
- la figure 3 est une représentation schématique vue de dessus d'une empreinte d'un dispositif de fixation selon un autre mode de réalisation,
- la figure 4 est une représentation schématique en perspective d'un moyen de maintien selon un mode de réalisation.

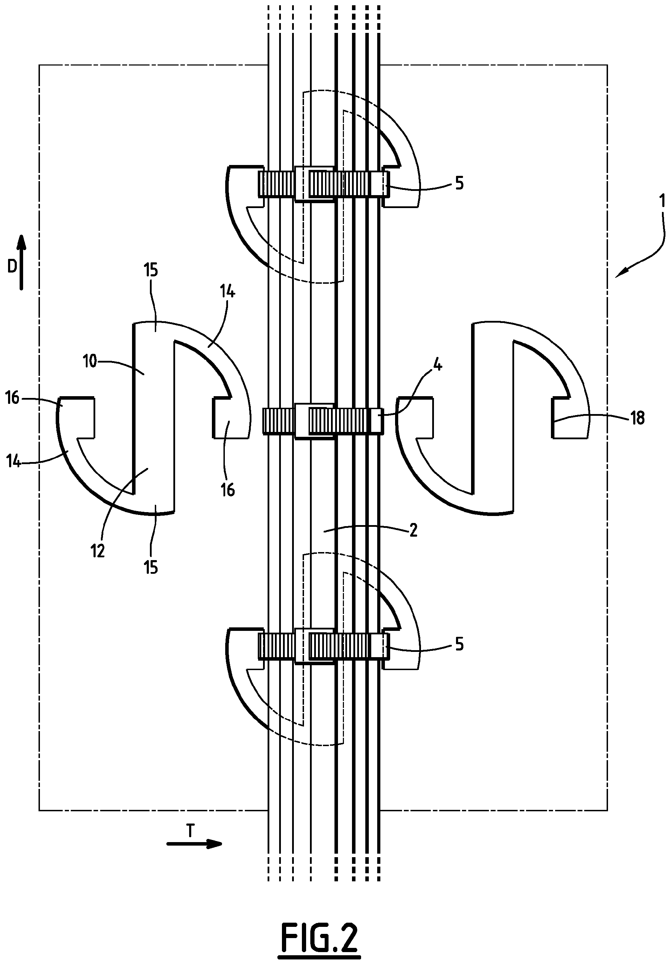

En référence aux figures 1 et 2, on décrit un dispositif de fixation 1 d'une pluralité de câbles 2 regroupés entre eux par au moins un moyen de serrage 4, du type collier de serrage de câbles. Les moyens de serrage 4 sont par exemple répartis le long des câbles 2 et sont séparés les uns des autres d'une distance environ égale à 50 cm.

Le dispositif de fixation 1 comprend une plaque 6 comprenant une première face 8 et une deuxième face (non représentée). La première face 8 est destinée à recevoir et à fixer la pluralité de câbles 2, comme cela sera décrit ultérieurement, afin d'acheminer ceux-ci de différents points à d'autre selon des chemins de câble prédéfinis.

La plaque 6 comprend une pluralité d'empreintes 10 permettant chacune de fixer un moyen de maintien 5. Dans le mode de réalisation représenté sur les figures 1 et 2, le moyen de maintien 5 est par exemple formé par un collier de serrage. Les empreintes 10 sont disposées en colonnes réparties les unes à côtés des autres selon la direction transversale de la plaque 8, c'est-à-dire que les colonnes sont réparties sur la largeur de plaque 6. Les empreintes 10 d'une colonne sont décalées selon la direction longitudinale par rapport aux empreintes 10 d'une colonne adjacente, comme représenté sur la partie inférieure de la figure 1. Les moyens de maintien 5 sont par exemple séparés d'une distance environ égale à 15 cm. Une telle distance permet de respecter notamment des exigences normatives et assure une fixation fiable des câbles sur la plaque 6. Les empreintes sont par exemple réalisées par emboutissage de la plaque 6 ou par découpe laser pour une plus grande précision dans la forme de l'empreinte. La plaque 6 est par exemple réalisée en inox ou en aluminium.

Une disposition des empreintes 10 telle que décrite ci-dessus permet à un opérateur de choisir un chemin de câble suivant les empreintes 10 sur lesquelles il fixe la pluralité de câbles 2. Un tel chemin est par exemple rectiligne si les empreintes choisies appartiennent à une même colonne.

Chaque empreinte 10 traverse la plaque 6 de la première face 8 à la deuxième face. Selon le mode de réalisation représenté sur les figures 1 et 2, elle comprend une fente 12 s'étendant selon une première direction D. La première direction D est la direction longitudinale de la plaque 6. Deux branches 14, comprenant chacune une première 15 et une deuxième 16 parties extrêmes, s'étendent respectivement à partir d'une des parties extrêmes de la fente 12. C'est-à-dire que la fente 12 relie les deux premières parties extrêmes 15 des branches 14. Les deuxièmes parties extrêmes 16 des branches 14 sont disposées de part et d'autre de la fente 12 et sont alignées selon une deuxième direction T différente de la première direction D. Selon le mode de réalisation représenté sur les figures, la deuxième direction T est la direction transversale de la plaque 6. C'est-à-dire que les deuxièmes parties extrêmes 16 des branches 14 sont alignées selon une direction sensiblement perpendiculaire à la direction de la fente 12. Selon le mode de réalisation représenté sur les figures, la droite reliant les deuxièmes parties extrêmes 16 des branches 14 coupe la fente 12 sensiblement en son milieu.

Les branches 14 sont sensiblement arrondies entre leur première partie extrême 15 et leur deuxième partie extrême 16. Ainsi, l'empreinte 10 présente sensiblement une forme de S.

On décrit à présent l'utilisation des empreintes 10 selon le mode de réalisation représenté sur les figures 1 et 2.

Pour fixer un ensemble de câbles 2 sur le dispositif de fixation 1, et plus particulièrement sur la première face 8 de la plaque 6, un opérateur commence par serrer la pluralité de câbles 2 entre eux par au moins un moyen de serrage 4 du type collier de serrage de câbles classique. Cette opération est très facilement réalisable puisque le moyen de serrage 4 ne doit pas préalablement être passé par des fentes de la plaque 6, comme c'était le cas pour des fentes comme celles représentées sur le haut de la figure 1. L'opérateur n'a donc pas besoin d'accéder à la deuxième face pour permettre le passage du collier.

L'opérateur prévoit ensuite des moyens de maintien 5 dans les empreintes 10 définissant le chemin de câble envisagé. Pour ce faire, l'opérateur introduit un moyen de maintien 5 dans la fente 12 d'une empreinte 10 selon la première direction D. Ainsi, la fente 12 forme un moyen d'introduction du moyen de maintien. Une partie du collier 5 traverse donc la plaque 6 et se retrouve sur la deuxième face de la plaque 6. Dans la première direction D, les extrémités de la partie du collier se trouvant sur la deuxième face se trouvent au niveau des parties extrêmes de la fente 12, c'est-à-dire des premières parties extrêmes 15 des branches 14.

L'opérateur effectue ensuite une rotation du moyen de maintien 5 de sorte que les extrémités de la partie de collier se trouvant sur la deuxième face s'engagent dans les branches 14. Selon le mode de réalisation représenté sur les figures, l'opérateur fait effectuer un quart de tour au moyen de maintien 5, c'est-à-dire qu'il tourne le moyen de maintien 5 de 90°de sorte que chaque extrémité de la partie de collier arrive à la deuxième partie extrême 16 d'une branche 14. Après ce quart de tour, le moyen de maintien 5 s'étend donc selon la deuxième direction T et est bloqué dans les deuxièmes parties extrêmes 16 des branches 14, comme représenté sur la figure 2. La forme arrondie des branches 14 permet de guider la rotation du moyen de maintien 5 jusqu'aux deuxièmes parties extrêmes 16 de sorte que la rotation du moyen de maintien 5 est réalisée facilement par l'opérateur.

L'opérateur dispose ensuite les câbles 2 serrés par les moyens de serrage 4 sur les empreintes 10 comprenant un moyen de maintien 5 et ferme les moyens de maintien autour des câbles 2 et serre ces moyens de maintien 5 afin d'assurer une fixation sûre des câbles 2 sur la plaque 6.

Les deuxièmes parties extrêmes 16 des branches 14 présentent des moyens de retenue 18 du moyen de maintien 5. Ces moyens de retenue 18 sont par exemple formés par un décrochement prévu à chaque deuxième partie extrême 16 des branches 14. Ce décrochement rapproche le bord d'une deuxième partie extrême 16 de l'autre deuxième partie extrême 16. Ainsi, lorsque les extrémités de la partie de collier se trouvant sur la deuxième face sont dans les décrochements 18, l'opérateur n'a plus qu'a effectuer un serrage supplémentaire du collier pour s'assurer que le moyen de maintien 5 est immobilisé par rapport à l'empreinte 10.

Les opérations décrites ci-dessus sont répétées pour d'autres moyens de maintien 5 appliqués en différents points de l'ensemble de câbles 2, comme représenté sur la figure 2. Ceci permet de fixer l'ensemble de câbles 2 sur la première face 8 de la plaque 6 tout le long d'un chemin de câble choisi par l'opérateur.

L'opérateur peut également disposer les moyens de maintien 5 autour des câbles 2 avant de les introduire dans les empreintes 10. L'opération d'introduction des moyens de maintien 5 dans les empreintes 10 est la même sauf que les câbles 2 sont déjà disposés dans les moyens de maintien.

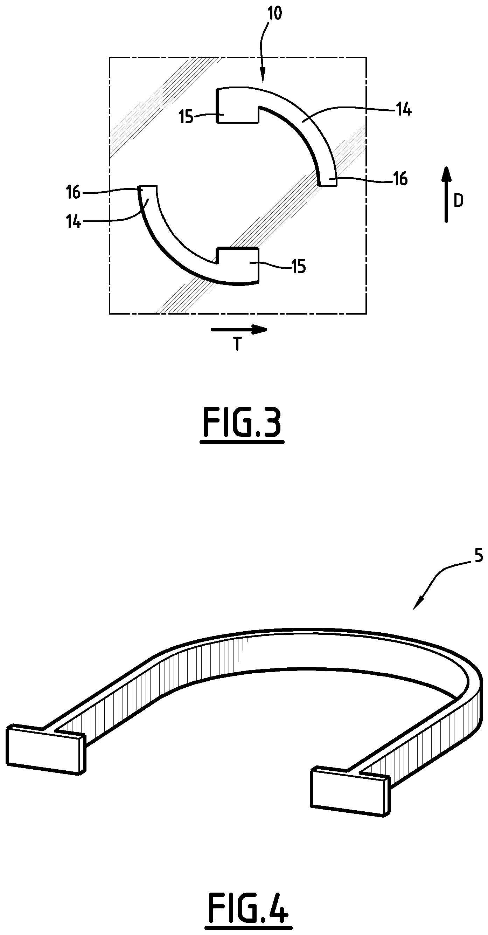

Selon un autre mode de réalisation, représenté sur la figure 3, l'empreinte 10 ne comprend pas de fente 12 reliant les branches 14. L'empreinte 10 n'est donc formée que des deux branches 14 arrondies entre leur première et leur deuxième parties extrêmes. Les premières parties extrêmes 15 des branches 14 sont alignées selon la première direction D, tandis que les deuxièmes parties extrêmes 16 des branches 14 sont alignées selon la deuxième direction T.

Des moyens de maintien 5 particuliers sont utilisés pour ce mode de réalisation. Un mode de réalisation de ces moyens de maintien est représenté sur la figure 4 et va à présent être décrit. Selon ce mode de réalisation, les moyens de maintien 5 sont par exemple formés par un collier de serrage comprenant en outre deux pattes 20 s'étendant sensiblement parallèlement et destinées à être introduites dans les premières parties extrêmes 15 des branches 14. Les parties extrêmes des pattes 20 comprennent des moyens de blocage du moyen de maintien 5 sur la plaque 6. Ces moyens de blocage 6 sont par exemple formé par des épaulements 22 s'étendant sensiblement perpendiculairement aux pattes 20. Pour permettre le passage des épaulements 22, les premières parties extrêmes 15 des branches 14 comprennent des moyens d'introduction des pattes 20. Ces moyens d'introduction sont par exemple formés par un décrochement 24 prévu à chaque première partie extrême 15 des branches 14. Ce décrochement 24 permet d'élargir l'empreinte au niveau des premières parties extrêmes, ce qui permet le passage des épaulements 22 vers la deuxième face.

On décrit à présent l'utilisation de l'empreinte 10 décrite ci-dessus L'opérateur commence par serrer les câbles 2 entre eux par des moyens de serrage 4. Des moyens de maintien 5 sont ensuite disposés autour des câbles 2 de sorte à être en regard d'empreintes 10 de la plaque 6. Les épaulements 22 sont introduits dans les décrochements 24, selon la première direction D, de sorte à passer sur la deuxième face. Ensuite, l'opérateur effectue une rotation du moyen de maintien 5 de sorte à amener les épaulements 22 jusqu'aux deuxièmes parties extrêmes 16 des branches 14. Ces deuxièmes parties extrêmes 16 sont agencées pour empêcher les épaulements 22 de sortir de l'empreinte 10, par exemple grâce à un dimensionnement approprié. Ainsi, les deuxièmes parties extrêmes 16 forment des moyens de retenue des moyens de maintien 5.

Selon l'écartement entre les pattes 20, les épaulements 22 peuvent être retenus entre les deuxièmes parties extrêmes 16, pour un écartement des pattes 20 inférieur à la distance séparant les deuxièmes parties extrêmes 16, ou à l'extérieur des deuxièmes parties extrêmes 16, pour un écartement des pattes 20 supérieur à la distance séparant les deuxièmes parties extrêmes 16.

Selon d'autres modes de réalisation, le moyen de maintien 5 présente une forme différente. Par exemple, le moyen de maintien 5 peut être un profilé en forme de U dont les branches comprennent, à leur partie extrême respective, un épaulement tel que décrit ci-dessus afin de former des moyens de blocage. Le moyen de maintien 5 peut également ne pas être un collier de serrage portant des pattes, mais un simple anneau, permettant le passage des câbles 2 et également muni de pattes.

Le dispositif décrit ci-dessus peut être utilisé dans toutes applications nécessitant l'acheminement de faisceaux de câbles de différents points à d'autres, et notamment dans des véhicules ferroviaires. Une pluralité de plaques 6 est par exemple disposée contre les parois d'un véhicule ferroviaire pour faire transiter des câbles entre différents points du véhicule.

Ce dispositif de fixation permet de fixer des ensembles de câbles rapidement le long de chemin de câble sans nécessiter d'opérations compliquées pour l'opérateur. En effet, celui-ci n'a pas à accéder à la deuxième face de la plaque 6 pour fixer les moyens de maintien 5 sur la plaque 6. Le temps de montage est donc considérablement réduit et facilité et ne nécessite pas de montage « en aveugle » lorsque la deuxième face n'est pas visible par l'opérateur.

## Revendications

1. Ensemble de fixation d'une pluralité de câbles (2) serrés entre eux par au moins un moyen de serrage (4), ledit ensemble comprenant un dispositif de fixation (1) comprenant une plaque (6) pourvue d'une première (8) et d'une deuxième faces, ledit ensemble comprenant en outre au moins un moyen de maintien (5), la pluralité de câbles (2) serrés entre eux étant destinée à s'étendre sur ladite première face (8) de ladite plaque (6) et étant fixée par ledit moyen de maintien (5), ladite plaque comprenant au moins une empreinte (10) traversant ladite plaque (6) de la première face (8) à la deuxième face, l'empreinte (10) comprend deux branches (14), lesdites branches comprenant chacune une première (15) et une deuxième (16) parties extrêmes, les premières parties extrêmes (15) desdites branches (14) étant alignées selon une première direction (D), les deuxièmes parties extrêmes (16) desdites branches étant alignées selon une deuxième direction (T) différente de la première, de sorte que le moyen de maintien (5) est introduit dans les premières parties extrêmes des branches (14) depuis la première face (8) selon la première direction (D), de sorte à faire passer une partie dudit moyen de maintien (5) sur la deuxième face de la plaque (6), puis est déplacé dans les branches (14) vers la deuxième direction (T) de sorte à être retenu sur la plaque (6) aux deuxièmes parties extrêmes (16) desdites branches (14), **caractérisé en ce que**,
le moyen de maintien (5) est formé par un collier de serrage comprenant en outre deux pattes (20) s'étendant sensiblement parallèlement et destinées à être introduites dans les premières parties extrêmes (15) des branches (14), les parties extrêmes des pattes (20) comprenant des moyens de blocage du moyen de maintien (5) sur la plaque (6) formés par des épaulements (22) s'étendant sensiblement perpendiculairement aux pattes (20), pour permettre le passage des épaulements (22), les premières parties extrêmes (15) des branches (14) comprenant des moyens d'introduction des pattes (20) formés par un décrochement (24) prévu à chaque première partie extrême (15) des branches (14).

2. Ensemble de fixation selon la revendication 1, **caractérisé en ce que** les branches (14) présentent une forme arrondie permettant de guider le moyen de serrage (4) en rotation jusqu'aux deuxièmes parties extrêmes (16) desdites branches (14).

3. Ensemble de fixation selon la revendication 1 ou 2, **caractérisé en ce que** les deuxièmes parties extrêmes (16) des branches (14) comprennent des moyens de retenue (18) du moyen de maintien (5).

4. -Ensemble de fixation selon l'une quelconque des revendications 1 à 3, **caractérisé en ce que** la deuxième direction (T) est sensiblement perpendiculaire à la première direction (D), de sorte que le moyen de maintien (5) est tourné de sensiblement 90° pour être fixé sur la plaque (6).

5. -Ensemble de fixation selon l'une quelconque des revendications 1 à 4, **caractérisé en ce que** la plaque (6) comprend une pluralité d'empreintes (10), lesdites empreintes (10) étant disposées les unes par rapport aux autres de sorte à former au moins un chemin de câble sur la première face (8) de la plaque (6).

6. Ensemble de fixation selon la revendication 5, **caractérisé en ce que** les empreintes (10) sont disposées en colonnes espacées les unes des autres selon la deuxième direction (T), les empreintes (10) d'une colonne étant décalées selon la première direction (D) par rapport aux empreintes (10) d'une colonne adjacente.

7. -Procédé de fixation de câbles (2) sur un ensemble de fixation selon l'une quelconque des revendications 1 à 6, **caractérisé en ce qu'**il comprend les étapes suivantes :
- serrer une pluralité de câbles (2) entre eux par au moins un moyen de serrage (4) de câbles et prévoir un moyen de maintien (5) de la pluralité de câbles (2) serrés entre eux sur le dispositif de fixation,
- introduire, selon une première direction (D), ledit moyen de maintien (5) dans les premières parties extrêmes (15) d'une empreinte (10) de la plaque (6) du dispositif de fixation (1),
- déplacer ledit moyen de maintien (5) vers la deuxième direction (T) de sorte qu'une partie dudit moyen de maintien (5) s'engage dans une branche (14) et une autre partie s'engage dans l'autre branche (14) de l'empreinte (10),
- poursuivre le mouvement jusqu'à ce que le moyen de maintien (5) soit amené dans les deuxièmes parties extrêmes (16) des branches (14).

8. Procédé de fixation selon la revendication 7, **caractérisé en ce que** les câbles serrés entre eux sont disposés sur les empreintes (10) selon un chemin de câble défini, le moyen de maintien (5) étant ensuite fermé autour des câbles (2).

9. Procédé de fixation selon la revendication 7, **caractérisé en ce que** le moyen de maintien (5) est fixé aux câbles (2) avant son introduction dans l'empreinte (10).

## Patentansprüche

1. Anordnung zum Befestigen einer Mehrzahl von Kabeln (2), die mittels mindestens eines Klemmmittels (4) untereinander festgeklemmt sind, wobei die Anordnung eine Befestigungsvorrichtung (1) aufweist, die eine mit einer ersten (8) und einer zweiten Seite versehene Platte (6) aufweist, wobei die Anordnung ferner mindestens ein Haltemittel (5) aufweist, wobei die Mehrzahl von untereinander festgeklemmten Kabeln (2) vorgesehen ist, um sich auf der ersten Seite (8) der Platte (6) zu erstrecken, und mittels des Haltemittels (5) befestigt ist, wobei die Platte mindestens eine Vertiefung (10) aufweist, die die Platte (6) von der ersten Seite (8) zu der zweiten Seite durchquert, wobei die Vertiefung (10) zwei Zweige (14) aufweist, wobei die Zweige jeweils einen ersten (15) und einen zweiten (16) Endabschnitt aufweisen, wobei die ersten Endabschnitte (15) der Zweige (14) entlang einer ersten Richtung (D) ausgerichtet sind, wobei die zweiten Endabschnitte (16) der Zweige entlang einer zweiten Richtung (T) ausgerichtet sind, die sich von der ersten unterscheidet, so dass das Haltemittel (5) entlang der ersten Richtung (D) von der ersten Seite (8) in die ersten Endabschnitte der Zweige (14) eingeführt ist, so dass ein Teil des Haltemittels (5) auf die zweite Seite der Platte (6) gelangt, anschließend in den Zweigen (14) in Richtung zu der zweiten Richtung (T) verlagert ist, um an den zweiten Endabschnitten (16) der Zweige (14) auf der Platte (6) gehalten zu sein, **dadurch gekennzeichnet, dass**
das Haltemittel (5) durch eine Klemmschelle ausgebildet ist, die ferner zwei Klauen (20) aufweist, die sich im Wesentlichen parallel erstrecken und vorgesehen sind, um in die ersten Endabschnitte (15) der Zweige (14) eingeführt zu sein, wobei die Endabschnitte der Klauen (20) Mittel zum Blockieren des Haltemittels (5) an der Platte (6) aufweisen, die durch Ansätze (22) ausgebildet sind, die sich im Wesentlichen senkrecht zu den Klauen (20) erstrecken, um das Passieren der Ansätze (22) zu ermöglichen, wobei die ersten Endabschnitte (15) der Zweige (14) Mittel zum Einführen der Klauen (20) aufweisen, die durch einen Rücksprung (24) ausgebildet sind, der an jedem ersten Endabschnitt (15) der Zweige (14) vorgesehen ist.

2. Anordnung zum Befestigen gemäß Anspruch 1, **dadurch gekennzeichnet, dass** die Zweige (14) eine abgerundete Form aufweisen, die es ermöglicht, das Klemmmittel (4) drehend bis zu den zweiten Endabschnitten (16) der Zweige (14) zu führen.

3. Anordnung zum Befestigen gemäß Anspruch 1 oder 2, **dadurch gekennzeichnet, dass** die zweiten Endabschnitte (16) der Zweige (14) Festhaltemittel (18) des Haltemittels (5) aufweisen.

4. Anordnung zum Befestigen gemäß irgendeinem der Ansprüche 1 bis 3, **dadurch gekennzeichnet, dass** die zweite Richtung (T) im Wesentlichen senkrecht zu der ersten Richtung (D) ist, so dass das Haltemittel (5) um im Wesentlichen 90° gedreht wird, um auf der Platte (6) befestigt zu sein.

5. Anordnung zum Befestigen gemäß irgendeinem der Ansprüche 1 bis 4, **dadurch gekennzeichnet, dass** die Platte (6) eine Mehrzahl von Vertiefungen (10) aufweist, wobei die Vertiefungen (10) bezüglich einander angeordnet sind, um mindestens eine Kabelführung auf der ersten Seite (8) der Platte (6) auszubilden.

6. Anordnung zum Befestigen gemäß Anspruch 5, **dadurch gekennzeichnet, dass** die Vertiefungen (10) in Spalten im Abstand voneinander entlang der zweiten Richtung (T) angeordnet sind, wobei die Vertiefungen (10) einer Spalte entlang der ersten Richtung (D) relativ zu den Vertiefungen (10) einer benachbarten Spalte versetzt sind.

7. Verfahren zum Befestigen von Kabeln (2) an einer Anordnung zum Befestigen gemäß irgendeinem der Ansprüche 1 bis 6, **dadurch gekennzeichnet, dass** es die folgenden Schritte aufweist:
- Festklemmen einer Mehrzahl von Kabeln (2) untereinander mittels mindestens eines Klemmmittels (4) für Kabel und Vorsehen eines Mittels zum Halten (5) der Mehrzahl von untereinander festgeklemmten Kabeln (2) an der Befestigungsvorrichtung,
- Einführen des Haltemittels (5) in die ersten Endabschnitte (15) einer Vertiefung (10) der Platte (6) der Befestigungsvorrichtung (1) entlang einer ersten Richtung (D),
- Verlagern des Haltemittels (5) in Richtung zu der zweiten Richtung (T), so dass ein Teil des Haltemittels (5) mit einem Zweig (14) in Eingriff gelangt und ein anderer Teil mit dem anderen Zweig (14) der Vertiefung (10) in Eingriff gelangt,
- Fortführen der Bewegung, bis das Haltemittel (5) in die zweiten Endabschnitte (16) der Zweige (14) geführt ist.

8. Verfahren zum Befestigen gemäß Anspruch 7,
**dadurch gekennzeichnet, dass** die untereinander festgeklemmten Kabel auf den Vertiefungen (10) entlang einer definierten Kabelführung angeordnet werden, wobei das Haltemittel (5) anschließend um die Kabel (2) herum geschlossen wird.

9. Verfahren zum Befestigen gemäß Anspruch 7,
**dadurch gekennzeichnet, dass** das Haltemittel (5) vor seinem Einführen in die Vertiefung (10) an den Kabeln (2) befestigt wird.

## Claims

1. Assembly for fixing a plurality of cables (2) grouped together using at least one clamping means (4), said assembly comprising a plate (6) which is provided with a first face (8) and a second face, said assembly further comprising at least one retention means (5), the plurality of cables (2) which are clamped together being intended to extend and be fixed to the first face (8) of the plate (6) by at least one retention means (5), the plate comprising at least one indentation (10) which extends through the plate (6) from the first face (8) to the second face, the indentation (10) comprises two branches (14), the branches each comprising a first end portion (15) and a second end portion (16), the first end portions (15) of the branches (14) being aligned in a first direction (D), the second end portions (16) of the branches being aligned in a second direction (T) different from the first so that the retention means (5) is introduced into the first end portions of the branches (14) from the first face (8) in the first direction (D) so as to move a portion of the retention means (5) to the second face of the plate (6), then is moved in the branches (14) in the second direction (T) so as to be retained on the plate (6) at the second end portions (16) of the branches (14)**characterized in that**,
the retention means (5) are formed by a clamping collar which further comprises two lugs (20) which extend in a substantially parallel manner and which are intended to be introduced into the first end portions (15) of the branches (14), the end portions of the lugs (20) comprising means for locking the retention means (5) on the plate (6) formed by shoulders (22) which extend substantially perpendicularly relative to the lugs (20), to allow the shoulders (22) to pass, the first end portions (15) of the branches 14 comprising means for introducing the lugs (20) formed by a recess (24) which is provided at each first end portion (15) of the branches (14).

2. Assembly for fixing according to claim 1, **characterised in that** the branches (14) have a rounded shape which allows the clamping means (4) to be guided in rotation as far as the second end portions (16) of the branches (14).

3. Assembly for fixing according to claim 1 or 2, **characterised in that** the second end portions (16) of the branches (14) comprise means (18) for retaining the retention means (5).

4. Assembly for fixing according to any one of claims 1 to 3, **characterised in that** the second direction (T) is substantially perpendicular to the first direction (D) so that the retention means (5) is rotated substantially through 90º in order to be fixed to the plate (6).

5. Assembly for fixing according to any one of claims 1 to 4, **characterised in that** the plate (6) comprises a plurality of indentations (10), the indentations (10) being arranged relative to each other so as to form at least one cable path on the first face (8) of the plate (6).

6. Assembly for fixing according to claim 5, **characterised in that** the indentations (10) are arranged in columns which are spaced-apart from each other in the second direction (T), the indentations (10) of one column being offset in the first direction (D) relative to the indentations (10) of an adjacent column.

7. Method for fixing cables (2) to an assembly for fixing according to any one of claims 1 to 6, **characterised in that** it comprises the following steps:
- clamping a plurality of cables (2) together using at least one cable clamping means (4) and providing a retention means (5) for keeping the plurality of cables (2) clamped together on the fixing device,
- introducing in a first direction (D) the retention means (5) into the first end portions (15) of an indentation (10) of the plate (6) of the fixing device (1),
- moving the retention means (5) in the second direction (T) so that a portion of the retention means (5) engages in one branch (14) and another portion engages in the other branch (14) of the indentation (10),
- continuing the movement until the retention means (5) is moved into the second end portions (16) of the branches (14).

8. Method for fixing according to claim 7, **characterised in that** the cables which are clamped together are arranged on the indentations (10) along a defined cable path, the retention means (5) then being closed around the cables (2).

9. Method for fixing according to claim 7, **characterised in that** the retention means (5) is fixed to the cables (2) before it is introduced into the indentation (10).
